**Europäisches Patentamt**

**European Patent Office**

**Office européen des brevets**

(19)

(11) Veröffentlichungsnummer: **0 155 032**
**B1**

(12) # EUROPÄISCHE PATENTSCHRIFT

(45) Veröffentlichungstag der Patentschrift:
**03.02.88**

(51) Int. Cl.⁴: **G 08 B 21/00**, G 07 C 9/00

(21) Anmeldenummer: **85200217.9**

(22) Anmeldetag: **20.02.85**

---

(54) **Überwachungsanordnung.**

---

(30) Priorität: **29.02.84 DE 3407345**

(43) Veröffentlichungstag der Anmeldung:
**18.09.85 Patentblatt 85/38**

(45) Bekanntmachung des Hinweises auf die Patenterteilung:
**03.02.88 Patentblatt 88/5**

(84) Benannte Vertragsstaaten:
**DE FR GB**

(56) Entgegenhaltungen:
**WO-A-82/00377**
**CH-A-615 522**
**DE-B-2 532 504**
**US-A-4 028 688**
**US-A-4 331 953**

(73) Patentinhaber: **Philips Patentverwaltung GmbH,
Wendenstrasse 35 Postfach 10 51 49, D-2000
Hamburg 1 (DE)**

(84) Benannte Vertragsstaaten: **DE**

(73) Patentinhaber: **N.V. Philips' Gloeilampenfabrieken,
Groenewoudseweg 1, NL- 5621 BA Eindhoven (NL)**

(84) Benannte Vertragsstaaten: **FR GB**

(72) Erfinder: **Kilian, Ernst- August, Vor dem Esch 37,
D-2800 Bremen 44 (DE)**

(74) Vertreter: **Poddig, Dieter, Dipl.- Ing., Philips
Patentverwaltung GmbH Wendenstrasse 35
Postfach 10 51 49, D-2000 Hamburg 1 (DE)**

---

## Beschreibung

Die Erfindung betrifft eine Anordnung zum Überwachen der Dauer der Anwesenheit einer Person in einem vorgegebenen abgeschlossenen Gebiet.

Bei größeren abgeschlossenen Gebieten wie Werksanlagen oder Bürokomplexen mit dezentralen Anlaufstellen für Lieferanten und Besucher ist es notwendig, die Zeit unter Kontrolle zu halten, in welcher der Werksfremde im Werksgelände unbeaufsichtigt unterwegs ist, um zu verhindern, daß der Werksfremde unerwünschte Handlungen wie insbesondere Werksspionage unternehmen kann. Eine Möglichkeit wäre, von der Pförtnerei aus, die jeder Werksfremde zunächst aufsuchen muß, die anzulaufende Stelle zu informieren, daß ein Besucher unterwegs ist und wann dieser Besucher voraussichtlich eintreffen wird. Bei einer größeren Anzahl von Besuchern ist dies jedoch sehr umständlich und unzuverlässig, und bei einer Verspätung des Besuchers kann nicht ohne weiteres geprüft werden, wo dieser sich aufhält.

Aufgabe der Erfindung ist es, eine Anordnung der eingangs genannten Art anzugeben, die an mindestens einer zentralen Stelle erkennen läßt, wenn ein Besucher eine vorgegebene Dauer entsprechend einer zumutbaren Wegezeit von einer Eingangsstelle zu einer Anlaufstelle überschreitet.

Diese Aufgabe wird erfindungsgemäß gelöst durch einen von der zu überwachenden Person mitzuführenden Sender zum Aussenden von elektromagnetischer Energie, mit einem Energiespeicher und mit einem Zeitglied, das bei Übergabe an die Person auf eine bestimmte Zeitdauer eingestellt ist und das nach Ablauf dieser Zeitdauer seit Übergabe eine Sendestufe zum Aussenden einer vorgegebenen Information ansteuert, und durch mindestens einen Empfänger, der bei Empfang der ausgesendeten vorgegebenen Information eine Anzeigeeinrichtung ansteuert.

Aus der US-A-4 331 953 ist ein System bekannt, durch das Personen bei gefährlichen Arbeiten überwacht werden können. Dabei trägt jede dieser Personen einen Sender, an dem vor Ablauf einer vorgegebenen Zeit eine Prüftaste von der Person betätigt werden muß, die den Sender zur Aussendung einer Information zu einer zentralen Stelle veranlaßt. In dieser zentralen Stelle werden die Zeitdauern zwischen zwei aufeinanderfolgenden Informationen jeweils eines Senders überwacht, und bei Überschreiten dieser Zeitdauer wird ein Alarm ausgelöst, damit geprüft werden kann, ob der den entsprechenden Sender tragenden Person ein Unglück zugestoßen ist. Bei diesem bekannten System ist also die Mitwirkung der den Sender tragenden Person notwendig. Eine solche Mitwirkung soll von einem werksfremden Besucher jedoch nicht nur nicht verlangt oder erwartet werden, sie soll sogar ausgeschlossen sein.

Mit der erfindungsgemäßen Anordnung wird dagegen zuverlässig geprüft, ob ein werksfremder Besucher eine vorgegebene zumutbare Wegezeit zwischen zwei zu besuchenden Stellen, insbesondere von einer Eingangsstelle zu einer Anlaufstelle oder zurück überschreitet, ohne daß diese Person dabei mitwirken muß und sogar ohne daß diese Person von der Tatsache der Überwachung erfahren muß.

Im allgemeinen muß in einem größeren Gebiet damit gerechnet werden, daß mehrere Besucher gleichzeitig zu möglicherweise verschiedenen Anlaufstellen unterwegs sind. Um bei der Meldung einer überschrittenen Wegedauer schneller erkennen zu können, welcher Besucher die vorgegebene Zeit für seinen Weg überschritten hat, ist es zweckmäßig, daß die vom Sender ausgesendete vorgegebene Information eine dem Sender individuell zugeordnete, einer Trägerfrequenz aufmodulierte Kennung in digitaler oder analoger Form ist. Auf diese Weise können im Empfänger bzw. auf der Anzeigeeinrichtung leicht die vorgegebenen Informationen verschiedener Sender unterschieden werden.

Um einen Besucher, der sich ohne böse Absicht zufällig verspätet, daran zu erinnern, daß die von ihm erwartete Wegezeit zur Anlaufstelle überschritten ist, ist es zweckmäßig, daß der Sender zusätzlich eine Einrichtung zum Abgeben einer sinnlich wahrnehmbaren Information bei Ablauf der eingestellten Zeitdauer aufweist. Dies kann eine akustische Information wie ein Warnton oder eine optische Information wie eine blinkende Lichtquelle sein. Die sinnlich wahrnehmbare Information weist außerdem in der Nähe des Besuchers befindliche Werksangehörige darauf hin, daß sich hier ein Besucher befindet, der sich länger als vorgesehen zwischen zwei zu besuchenden Stellen aufhält. Der Besucher hat beim Auftreten der sinnlich wahrnehmbaren Information von seinem Sender dann die Möglichkeit, sich beim Aufsuchen der vorgesehenen Anlaufstelle zu beeilen, so daß er diese erreichen kann, bevor wegen seiner Verspätung Maßnahmen zum Suchen nach dem verspäteten Besucher eingeleitet werden.

Um die an die Person zu übergebenden Sender leichter handhaben zu können und Bedienungsfehler nach Möglichkeit zu vermeiden, ist es zweckmäßig, daß an der Übergabestelle des Senders eine Aufnahmevorrichtung für diese vorgesehen ist, die elektrische Kontakte aufweist, die beim Einsetzen des Senders mit entsprechenden Kontakten an diesem in elektrische Verbindung treten und den Energiespeicher des Senders auffüllen und die beim Lösen der elektrischen Verbindung das Zeitglied automatisch starten. Dadurch braucht der Pförtner lediglich einen Sender aus der Aufnahmevorrichtung herauszunehmen und an den Besucher zu übergeben, wobei alle Funktionen dann automatisch ausgelöst werden. Gegebenenfalls kann vor dem Herausnehmen des Senders noch die vom Besucher gewünschte Anlaufstelle eingegeben und die Zeitdauer des Zeitgliedes automatisch individuell darauf eingestellt werden.

Um auf einfache Weise zu verhindern, daß in einem Sender nach Erreichen der vorgesehenen Anlaufstelle oder nach Rückkehr zur Pförtnerei das Zeitglied weiterläuft und die eingestellte Zeitdauer erreicht, wodurch die Information ausgelöst wird, ist es zweckmäßig, daß beim Einsetzen des Senders in die Aufnahmevorrichtung das Zeitglied automatisch in eine Ruhestellung gesetzt wird. Dies bedeutet, daß außer in der Pförtnerei an jeder Anlaufstelle eine Aufnahmevorrichtung für Sender vorgesehen ist.

Weitere Ausgestaltungen der Erfindung sind in den restlichen Unteransprüchen gekennzeichnet.

Ein Ausführungsbeispiel der Erfindung wird nachstehend anhand der Zeichnung näher erläutert. Es zeigen

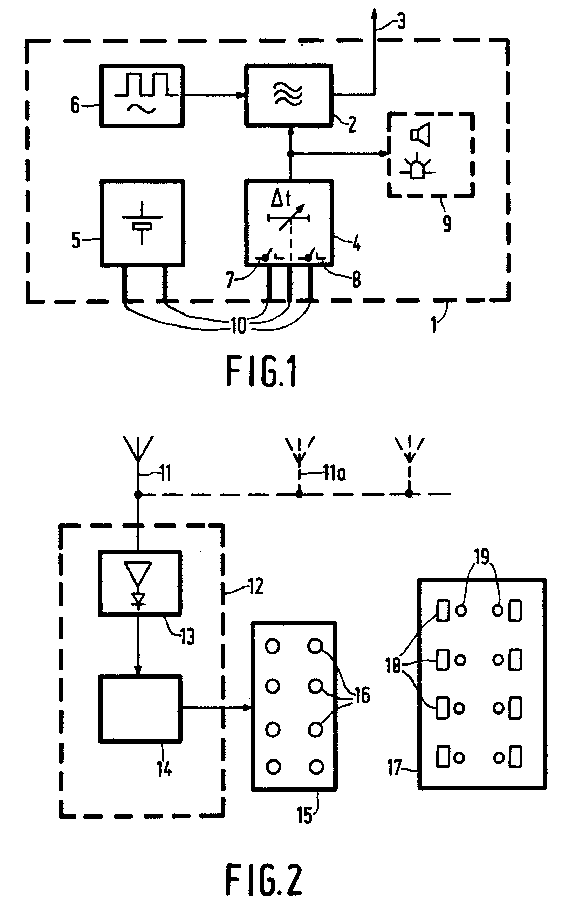

Fig. 1 das Blockschaltbild eines Senders, Fig. 2 das Blockschaltbild eines Empfängers mit Anzeigevorrichtung und Aufnahmevorrichtung.

In Fig. 1 enthält der Sender 1 eine Sendestufe 2, deren Ausgang mit einer Antenne 3 verbunden ist. Diese Antenne kann auf verschiedene Weise ausgeführt sein, beispielsweise als Notch-Antenne, oder in dem Gehäuse des Senders 1 integriert sein, so daß sie äußerlich nicht sichtbar ist. Derartige Ausführungen von Antennen sind an sich bekannt.

Die Sendestufe 2 befindet sich normalerweise im Ruhezustand und wird nur durch ein Signal einer Zeitstufe 4 in Betrieb gesetzt. Dabei erzeugt die Sendestufe 2 eine Trägerfrequenz, die durch ein von einem Generator 6 erzeugtes Signal moduliert wird. Diese Modulation kann beispielsweise eine bestimmte Frequenz im NF-Bereich sein, oder die Sendestufe 2 wird von dem Generator 6 derart getastet, daß ein bestimmtes Binärwort in dem über die Antenne 3 abgestrahlten Signal enthalten ist.

Mit dem Ausgangssignal des Zeitgliedes 4 wird auch eine wahlweise vorhandene Einrichtung 9 zum Erzeugen eines akustischen oder optischen Signals nach außerhalb des Senders angesteuert. Das Zeitglied 4 wird durch einen Schalter 7 gestartet, wodurch nach Ablauf der eingestellten Zeitdauer $\Delta t$ ein Ausgangssignal erzeugt wird, das der Sendestufe 2 und ggf. der Einrichtung 9 zugeführt wird. Durch einen weiteren Schalter 8 kann das Zeitglied 4 wieder auf die Anfangsstellung zurückgesetzt werden. Die Zeitdauer $\Delta t$ des Zeitgliedes 4 kann entweder fest eingestellt sein oder von außen einstellbar sein. Diese Einstellung erfolgt ebenso wie die Betätigung der Schalter 7 und 8 über nach außerhalb des Senders 1 führende Kontakte 10, an die entsprechende Signale angelegt werden können. Ferner ist eine Energieversorgung 5 in Form einer Batterie vorhanden, die die Sendestufe 2, das Zeitglied 4, den Generator 6 und ggf. die Einrichtung 9 mit elektrischer Energie versorgt und die ebenfalls mit nach außerhalb des Senders 1 führenden Kontakten 10 verbunden ist, über die der Batterie 5 elektrische Energie von außen zugeführt werden kann.

Der Sender 1 kann in ein kleines Gehäuse eingesetzt werden, da nur eine geringe Sendeenergie notwendig ist, wenn mehrere Empfangsantennen an verschiedenen Stellen des Werksgeländes bzw. des Bürohauses vorgesehen werden, so daß die Entfernung zwischen Sender und einer Empfangsantenne eine vorgegebene Distanz nicht überschreitet. Bei Ausführung als integrierte Schaltung kann der Sender 1 auch in eine Identifizierungskarte eingebaut sein, die derzeit häufig verwendet werden, indem der Besucher diese sichtbar an seiner Kleidung befestigt, um ihn von Werksangehörigen zu unterscheiden und für diese als Besucher erkennbar zu machen.

Andererseits kann der Sender 1 auch in ein Gehäuse eingebaut sein, das mit Befestigungsmitteln wie Haftmagnete oder Saugnäpfe versehen ist, um das Gehäuse leicht an Kraftfahrzeugen befestigen zu können. Ein solches Gehäuse kann aus einem weichen Kunststoff oder aus Gummi hergestellt sein. Beim Anbringen eines Senders an einem Kraftfahrzeug wird dieses unabhängig von dem Fahrer überwacht, der ggf. einen weiteren Sender zum Befestigen an der Kleidung erhält.

Grundsätzlich können die Gehäuse so gestaltet sein, daß für einen Besucher, der derartige Einrichtungen nicht kennt und auch nicht davon erfahren hat, nicht erkennbar wird, daß darin eine elektronische Schaltung enthalten ist.

Wenn zu befürchten ist, daß Besucher in böser Absicht den Sender beschädigen oder zerstören, um ein Aussenden des Warnsignals nach Ablauf der eingestellten Zeitdauer zu verhindern, kann es auch zweckmäßig sein, daß die Sendestufe 2 vor Ablauf der Zeitdauer des Zeitgliedes 4 in bestimmten Abständen ein anders moduliertes Signal abstrahlt, um erkennbar zu machen, daß der Sender noch arbeitet. Falls dieses andere Signal dann nicht mehr empfangen wird, kann eine Suchaktion nach dem betreffenden Besucher gestartet werden, abhängig von der Empfangsantenne, die als letzte ein Signal von dem Sender erhalten hat. Es ist klar, daß zur Verhinderung von Manipulationen des Besuchers an dem Sender die Kontakte 10 möglichst verborgen und schwer zugänglich angeordnet sind. Die Schalter 7 und 8 können auch auf andere Weise betätigt werden, beispielsweise durch von außen in bestimmter Weise herangeführte Magnete. Dies kann automatisch in der Aufnahmevorrichtung 17 geschehen, die in Fig. 2 angedeutet ist.

In dieser Aufnahmevorrichtung 17 sind Öffnungen 18 vorgesehen, in die jeweils ein Sender eingesetzt werden kann. Dabei sind in diesen Öffnungen 18 elektrische Kontakte so angeordnet, daß sie beim Einsetzen eines Senders mit dessen elektrischen Kontakten 10 leitend in Verbindung treten. Dadurch wird ein in einer Öffnung 18 der Aufnahmevorrichtung 17 eingesetzter Sender automatisch in der Ruhestellung gehalten, indem der Schalter 8 geschlossen und der Schalter 7 geöffnet wird. Gleichzeitig wird der Energiespeicher 5 aufgeladen. Ferner kann über Bedienungselemente 19 die Zeitdauer Δt jedes Senders individuell eingestellt werden, vorzugsweise abhängig von der gewünschten Anlaufstelle. Der Schalter 7 kann so ausgebildet sein, daß beim Herausnehmen des Senders aus der Aufnahmevorrichtung 17 oder beim Anbringen an der Kleidung des Besuchers oder an einem Kraftfahrzeug automatisch das Zeitglied 4 gestartet wird.

Der in Fig. 2 dargestellte Empfänger weist eine Anzahl räumlich getrennt angeordneter Antennen 11, 11a usw. auf, die zweckmäßig so räumlich angeordnet sind, daß von beliebigen Stellen des Werksgeländes aus die größte Entfernung zur nächstgelegenen Antenne einen vorgegebenen Wert nicht überschreitet.

Die Antennen 11, 11a usw. führen, ggf. über Verstärker und/oder Umsetzer, auf einen Empfänger 12, der einen Empfangsverstärker mit Demodulator 13 aufweist. An dessen Ausgang erscheint ein Signal entsprechend dem von dem Generator 6 in einem Sender erzeugten Signal, das einem Dekodierer 14 zugeführt wird. Dieser entschlüsselt anhand des demodulierten Empfangssignals, welcher Sender ein Kennungssignal ausstrahlt, und steuert mit den dekodierten Signalen eine Anzeigevorrichtung 15 an, die für jeden vorhandenen Sender eine Anzeigelampe 16 aufweist. Wenn in einem Sender in dem darin enthaltenen Zeitglied die eingestellte Zeitdauer abgelaufen ist und dieser Sender sein zugeordnetes Kennungssignal aussendet, leuchtet dann die entsprechende Anzeigelampe 16 auf, so daß sofort erkannt werden kann, welcher Besucher sich länger als vorgegeben innerhalb des Werksgeländes aufhält.

Um in einem solchen Falle den Aufenthaltsort des Besuchers schnell feststellen zu können, ist es zweckmäßig, zusätzlich einen beispielsweise tragbaren Empfänger mit einer Peilantenne zu verwenden.

**Patentansprüche**

1. Anordnung zum Überwachen der Dauer der Anwesenheit einer Person in einem vorgegebenen abgeschlossenen Gebiet, gekennzeichnet durch einen von der zu überwachenden Person mitzuführenden Sender (1) zum Aussenden von elektromagnetischer Energie, mit einem Energiespeicher (5) und mit einem Zeitglied (4), das bei Übergabe an die Person auf eine bestimmte Zeitdauer eingestellt ist und das nach Ablauf dieser Zeitdauer seit Übergabe eine Sendestufe (2) zum Aussenden einer vorgegebenen Information ansteuert, und durch mindestens einen Empfänger (12), der bei Empfang der ausgesendeten vorgegebenen Information eine Anzeigeeinrichtung (15) ansteuert.

2. Anordnung nach Anspruch 1, dadurch gekennzeichnet, daß die vom Sender (1) ausgesendete vorgegebene Information eine dem Sender (1) individuell zugeordnete, einer Trägerfrequenz aufmodulierte Kennung in digitaler oder analoger Form ist.

3. Anordnung nach Anspruch 1 oder 2, dadurch gekennzeichnet, daß der Sender (1) zusätzlich eine Einrichtung (9) zum Abgeben einer sinnlich wahrnehmbaren Information bei Ablauf der eingestellten Zeitdauer aufweist.

4. Anordnung nach Anspruch 1, 2 oder 3, dadurch gekennzeichnet, daß an der Übergabestelle des Senders (1) eine Aufnahmevorrichtung (17) für diese vorgesehen ist, die elektrische Kontakte aufweist, die beim Einsetzen des Senders mit entsprechenden Kontakten (10) an diesem in elektrische Verbindung treten und den Energiespeicher (5) des Senders (1) auffüllen und die beim Lösen der elektrischen Verbindung das Zeitglied (4) automatisch starten.

5. Anordnung nach Anspruch 4, dadurch gekennzeichnet, daß beim Einsetzen des Senders (1) in die Aufnahmevorrichtung (17) das Zeitglied (4) automatisch in eine Ruhestellung gesetzt wird.

6. Anordnung nach Anspruch 1 oder einem der folgenden, dadurch gekennzeichnet, daß die Antenne (3) des Senders (1) in dessen Gehäuse integriert ist.

7. Anordnung nach Anspruch 1 oder einem der folgenden, dadurch gekennzeichnet, daß der Sender (1) als eine flache Karte zum Befestigen an der Kleidung der Person ausgeführt ist.

8. Anordnung nach einem der Ansprüche 1 bis 6, dadurch gekennzeichnet, daß der Sender (1) in ein Gehäuse eingebaut ist, das Befestigungsmittel wie Haftmagnete oder Saugnäpfe zur Befestigung an einem Kraftfahrzeug aufweist.

9. Anordnung nach Anspruch 2 oder einem der folgenden, dadurch gekennzeichnet, daß die Anzeigeeinrichtung (15) mehrere Anzeigeelemente (16) aufweist, die je einem von mehreren Sendern (1) individuell zugeordnet sind.

10. Anordnung nach Anspruch 1 oder einem der folgenden, dadurch gekennzeichnet, daß der Empfänger (12) mehrere räumlich getrennte Antennen (11, 11a,...) aufweist.

## Claims

1. An arrangenent for monitoring the duration of the presence of a person in a given closed region, characterized by a transmitter (1) to be carried along by the person to be monitored for emitting electromagnetic energy comprising an energy storage (5) and a timing member (4) which, when the transmitter is handed to the person, is adjusted to a given time duration and which after termination of the time duration from the handling-over instant drives a transmitter stage (2) to transmit a given information, and by at least one receiver (12), which, when the transmitted given information is received, drives an indication device (15).

2. An arrangement as claimed in Claim 1, characterized in that the given information transmitted by the transmitter (1) is an identification signal in digital or analogue form associated individually with the transmitter (1) and modulated onto a carrier frequency.

3. An arrangement as claimed in Claim 1 or 2, characterized in that the transmitter (1) additionally comprises a device (9) for supplying a sensorily perceptible information upon termination of the adjusted time duration.

4. An arrangement as claimed in Claim 1, 2 or 3, characterized in that at the place at which the transmitter (1) is handed over there is provided a container (17) for these transmitters, which has electrical contacts, which upon insertion of the transmitter are electrically connected to corresponding contacts (10) on this transmitter and fill the energy storage (5) of the transmitter (1) and which start automatically the timing member (4) when the electrical connection is interrupted.

5. An arrangement as claimed in Claim 4, characterized in that upon insertion of the transmitter (1) into the container (17) the timing member (4) is set automatically to a rest position.

6. An arrangement as claimed in Claim 1 or any one of the following Claims, characterized in that the aerial (3) of the transmitter (1) is integrated in the housing of the latter.

7. An arrangement as claimed in Claim 1 or any one of the following Claims, characterized in that the transmitter (1) takes the form of a flat card to be fixed to the clothes of the person.

8. An arrangement as claimed in any one of the Claims 1 to 6, characterized in that the transmitter (1) is incorporated in a housing, which has fixing means, such as adhesion magnets or suction cups for fixing to an automobile.

9. An arrangement as claimed in Claim 2 or any one of the following Claims, characterized in that the indication device (15) has several indication elements (16) which are each associated with one of several transmitters (1).

10. An arrangement as claimed in Claim 1 or any one of the following Claims, characterized in that the receiver (12) has several spatially separated aerials (11, 11a...).

## Revendications

1. Dispositif pour surveiller la durée de la présence d'une personne dans un domaine clos prédéfini, caractérisé par un émetteur (1) â transporter par la personne à surveiller pour émettre de l'énergie électromagnétique, comportant un dispositif de stockage d'énergie (5) et un élément temporisateur (4), qui, au moment où il est remis à la personne, est régle sur une periode déterminée et qui, au terme de cette période partant de la remise, active un étage d'émission (2) pour émettre une information prédéfinie, et par au moins un récepteur (12) qui, lors de la réception de l'information prédéfinie émise, active un dispositif d'affichage (15).

2. Dispositif suivant la revendication 1, caractérisé en ce que l'information prédéfinie émise par l'émetteur (1) est une identification numérique ou analogique modulée sur une fréquence porteuse et attribuée individuellement à l'émetteur (1).

3. Dispositif suivant la revendication 1 ou 2, caractérisé en ce que l'émetteur (1) comporte, en outre, un dispositif (9) destiné à produire une information perceptible au terme de la période réglée.

4. Dispositif suivant la revendication 1, 2 ou 3, caractérisé en ce qu'à l'endroit de remise de l'émetteur (1) est prévu un dispositif support (17) pour celui-ci, qui comporte des contacts électriques qui, lors de la mise en place de l'émetteur, se connectent électriquement à des contacts correspondants (10) de cet émetteur, chargent le dispositif de stockage d'énergie (5) de l'émetteur (1) et font automatiquement démarrer l'élément temporisateur (4) lors de l'interruption de la connexion électrique.

5. Dispositif suivant la revendication 4, caractérisé en ce que lors de la mise en place de l'émetteur (1) dans le dispositif support (17), l'élément temporisateur (4) est automatiquement amené dans une position de repos.

6. Dispositif suivant la revendication 1 ou l'une quelconque des revendications suivantes, caractérisé en ce que l'antenne (3) de l'émetteur (1) est intégrée dans son boîtier.

7. Dispositif suivant la revendication 1 ou l'une quelconque des revendications suivantes, caractérisé en ce que l'émetteur (1) a la forme d'une carte plate à fixer aux vêtements de la personne.

8. Dispositif suivant l'une quelconque des revendications 1 à 6, caractérisé en ce que l'émetteur (1) est incorporé dans un boîtier qui comporte des moyens de fixation, comme des aimants ou des ventouses, en vue de sa fixation sur une automobile.

9. Dispositif suivant la revendication 2 ou l'une quelconque des revendications suivantes, caractérisé en ce que le dispositif d'affichage (15) comporte plusieurs éléments d'affichage (16) qui sont attribués individuellement à chacun de plusieurs émetteurs (1).

10. Dispositif suivant la revendication 1 ou l'une quelconque des revendications suivantes, caractérisé en ce que le récepteur (12) comporte plusieurs antennes séparées dans l'espace (11, 11a,...).

FIG.1

FIG.2